# EUROPÄISCHE PATENTSCHRIFT

(11) **EP 1 172 344 B1**
(45) Veröffentlichungstag und Bekanntmachung des Hinweises auf die Patenterteilung: **24.01.2007**
(21) Anmeldenummer: 01113238.8
(22) Anmeldetag: 31.05.2001
(51) Int. Cl.: C04B 28/14

(54) **Werk Trockenmörtel auf Basis von Lehmpulver**
Dry mortar based on clay powder
Mortier sec à base d'argile

(30) Priorität: 14.07.2000 DE 10034347
(43) Veröffentlichungstag der Anmeldung: 16.01.2002
(73) Patentinhaber: Knauf Gips KG, 97346 Iphofen (DE)
(72) Erfinder: Limmer, Bärbel, 90409 Nürnberg (DE); Hummel, Hans-Ulrich, Prof. Dr., 97348 Markt Einersheim (DE); Winkler, Gerhard, 91486 Ühlfeld (DE)
(74) Vertreter: Werner, Hans-Karsten

(56) Entgegenhaltungen:
- WO-A-01/28697
- FR-A- 2 444 013
- GB-A- 1 122 424
- US-A- 2 410 865
- US-A- 3 100 715
- US-A- 3 284 227
- US-A- 5 482 551
- CHEMICAL ABSTRACTS + INDEXES, AMERICAN CHEMICAL SOCIETY. COLUMBUS, US, 13. Juni 1977 (1977-06-13), XP000156308 ISSN: 0009-2258

## Beschreibung

Gegenstand der vorliegenden Erfindung ist ein Werk Trockenmörtel auf der Basis von Lehmpulver, Zuschlägen und sonstigen üblichen Zusätzen.

Lehmputze wurden in der Vergangenheit sehr viel verwendet. Es fand jedoch praktisch keine Weiterentwicklung dieses Baustoffs statt, so dass er heute praktisch nur noch im Bereich der Denkmalpflege und in einigen Ökoprojekten zum Einsatz kommt. Von der Firma Colfirmit Rajasil GmbH, Marktredwitz, ist ein Lehmdekorputz auf den Markt gebracht worden, welcher außer verschiedenen Tonen in gleichmäßiger Zusammensetzung Natursande mit dem Größtkorn 0,5mm und natürliche Pigmente enthält. In der Gebrauchsanweisung wird ausdrücklich darauf hingewiesen, dass dieses Produkt keinesfalls mit gips-, kalk- oder zementgebundenen Mörtel und Verunreinigungen vermischt werden darf, da dabei die Bindekraft des Lehms verloren geht. Die Trockenzeit beträgt unter normalen Trocknungsbedingungen (20°C, 60 % relative Luftfeuchtigkeit) 1 - 2 Tage / mm Putzdicke. Bei extrem hoher Luftfeuchtigkeit und bei gering saugenden Untergründen ist von einer erheblich längeren Trocknungszeit auszugehen.

Da Lehmputze eine Mindestdicke von 12 mm aufweisen sollen und allgemein mindestens zweilagig aufgetragen werden, entsteht ein sehr hoher Zeitbedarf und ein hoher Arbeitsaufwand. Ein großer Nachteil der Lehmputze ist die geringe Festigkeit, und zwar insbesondere bezüglich Biegezug und Druck. Lehmputze weisen eine geringe Haftzugfestigkeit auf und zeigen oft Haftrisse. Beim Austrocknen zeigen Lehmputze ein starkes Schwindverhalten. Die Oberflächenbearbeitung ist schwierig, da Lehmputze nicht glättbar sind und deshalb als zu grobkörnig empfunden werden. Die fertigen Lehmputze können im allgemeinen gestrichen und gerollt werden, während Tapezieren während der geringen Haftzugfestigkeit auf dem Untergrund problematisch ist.

Die Erfindung hat sich die Aufgabe gestellt, einen Lehmputz, und zwar als Werk Trockenmörtel, auf Basis von Lehmpulver zur Verfügung zu stellen, welcher äußerlich das Aussehen eines Lehmputzes hat und die bauphysikalischen Vorteile des Lehmputzes aufweist, nämlich hohe Aufnahme von Luftfeuchtigkeit, die zu einem späteren Zeitpunkt wieder abgegeben werden kann, gleichzeitig aber die oben genannten Nachteile des Lehmputzes nicht mehr aufweist und darüber hinaus sehr viel einfacher und schneller verarbeitet werden kann.

Diese Aufgabe wurde jetzt dadurch gelöst, dass der Werk Trockenmörtel 20 bis 60 Gew.% abbindefähigen Gips enthält. Der Anteil an Lehmpulver kann dabei auf 15 bis 40 Gew.%, vorzugsweise 20 bis 30 Gew.%, gesenkt werden. Vorzugsweise weist der erfindungsgemäße Werk Trockenmörtel einen Zuschlag von bis zu 40 Gew.% Kornträger auf. Als Kornträger kommen insbesondere in Frage Kalksteingries, Estrichgips, Naturanhydrit, Sand, Ziegelsplitt, Hohlglaskugeln oder Gemische derselben. Es ist auch möglich, bis zu 300 l/t Perlite zuzusetzen. Schließlich ist der Zusatz von bis zu 2 Gew.% Fasern möglich sowie der Zusatz von Kalkhydrat, Stellmittel, Abbindeverzögerer, Abbindebeschleuniger, Netzmittel, Verdicker und/oder Mittel zur Regulierung der Wasserrückhaltung. Als abbindefähige Gipse kommen vor allem die für Putzgipse verwendeten Halbhydrate, Anhydrit und Gemische derselben in Frage.

Der erfindungsgemäße Werk Trockenmörtel muss nicht mehr wie herkömmlicher Lehmputz austrocknen, um dann rein mechanisch zu haften. Es tritt vielmehr der chemische Abbindeprozess des Gipsanteils ein. Dieser Kristallisationsprozess gibt dem Lehm einen besseren inneren Zusammenhalt und führt zu einer Verkrallung an der Wand. Die für Lehmputz im allgemeinen notwendige Armierung an der Wand wird nicht mehr benötigt. Überraschenderweise ist aber die Feuchtigkeitsaufnahmefähigkeit des fertigen Putzes durchaus vergleichbar mit dem konventioneller Lehmputze, während marktgängiger Gipsfertigputz im allgemeinen nur 20 bis 30 % der Feuchtigkeit aufnehmen kann.

Weitere überraschende Vorteile des neuen Werk Trockenmörtels sind, dass er einlagig verarbeitbar ist und somit einen geringeren Arbeitsaufwand erfordert. Die Ergiebigkeit liegt wesentlich höher, nämlich bei ca. 110 bis 115 Litern/100 kg bei einer normalen Putzdicke von mindestens 8 mm. Herkömmlicher Lehmputz weist im allgemeinen nur eine Ergiebigkeit von 67 Litern/100 kg auf und muss mindestens 12 mm stark und zweilagig aufgetragen werden.

Das Breilitergewicht des neuen Werk Trockenmörtels beträgt 1400 g/Liter, während herkömmlicher Lehmputz ein Breilitergewicht von mehr als 1900 g/Liter aufweist. Dies bedingt einen höheren Kraftaufwand bei der Verarbeitung.

Die Festigkeitswerte nach DIN 1168 betragen beim erfindungsgemäßen Produkt im Biegezug 1,18 MN/m², während konventioneller Lehmputz nur einen Biegezug von 0,38 MN/ m² aufweist. Die Druckfestigkeit beträgt beim erfindungsgemäßen Produkt 3.0 MN/ m², während herkömmlicher Lehmputz nur eine Druckfestigkeit von 0,91 MN/ m². Nur bei der Härte ist das erfindungsgemäße Produkt dem Lehmputz geringfügig unterlegen, nämlich 5,0 MN/m² gegenüber 6,8 MN/ m².

Für die Praxis bedeutungsvoll ist aber die gute Haftzugfestigkeit von 0,45 MN/ m², während Lehmputz nur eine Haftzugfestigkeit von 0,04 MN/ m² aufweist, so dass das erfindungsgemäße Produkt nur Putzrisse aufweist, während Lehmputz überwiegend Haftrisse zeigt. Das erfindungsgemäße Produkt trocknet zügig aus und bindet ab und kann bereits nach Stunden weiterverarbeitet werden, während Lehmputzmörtel Tage zum Austrocknen braucht. Das erfindungsgemäße Produkt ist raumstabil, während Lehmputzmörtel ein starkes Schwindverhalten und damit Rissbildung zeigt. Die Oberflächenbearbeitung des erfindungsgemäßen Produktes ist sehr viel vorteilhafter, da es glättbar und frei strukturierbar ist, während konventioneller Lehmputzmörtel nicht glättbar ist, zu grobkörnig ist und bei zweilagiger Verarbeitung oft noch ein finish nötig ist. Schließlich kann das erfindungsgemäße Produkt nicht nur gestrichen und gerollt, sondern auch tapeziert werden, während Letzteres bei Lehmputzmörtel wegen der geringen Haftzugfestigkeit auf dem Untergrund sehr problematisch ist.

Bevorzugte Rezepturen des Werk Trockenmörtels enthalten außer Gips und Lehmpulver/Tonmehl auch Perlite, Kalksteingries 0,2 bis 0,6 mm und ggf. noch geringe Mengen von Fasern, beispielsweise Zellulosefasern. Anstelle von Zellulosefasern können aber auch andere Fasern, insbesondere Naturfasern verschiedener Art, eingesetzt werden.

Sofern der Verarbeiter streng ökologisch bauen will, kann auf die Komponenten Stellmittel, Abbindeverzögerer, Abbindebeschleuniger, Netzmittel und Verdicker sowie Mittel zur Regulierung der Wasserrückhaltung verzichtet werden. Für den herkömmlichen Baubereich, der sich an geringen Anteilen dieser Komponenten nicht stört, können aber die Eigenschaften des neuen Werk Trockenmörtels weiter verbessert und optimiert werden.

Der neue Werk Trockenmörtel auf Basis von Lehmpulver ist somit in der Lage, alle Vorteile des herkömmlichen Lehmmörtels beizubehalten, jedoch obendrein alle Vorteile der bisher bekannten Gipsmörtel ebenfalls zur Verfügung zu stellen. Es handelt sich somit um eine Neuentwicklung, die ökologische und ökonomische Vorteile miteinander verbindet und daher in sehr breiter Form zur Anwendung kommen kann.

## Patentansprüche

1. Werk Trockenmörtel auf Basis von Lehmpulver, Zuschlägen und sonstigen üblichen Zusätzen, **dadurch gekennzeichnet, dass** er
• 20 bis 60 Gew.% abbindefähigen Gips und
• 20 bis 40 Gew.-% Lehmpulver
enthält.

2. Werk Trockenmörtel gemäß Anspruch 1, **dadurch gekennzeichnet, dass** der Anteil an Lehmpulver 20 bis 30 Gew.% beträgt.

3. Werk Trockenmörtel gemäß Anspruch 1 oder 2, **dadurch gekennzeichnet, dass** er als Zuschlag bis zu 40 Gew.% Kornträger enthält.

4. Werk Trockenmörtel gemäß einem der Ansprüche 1 bis 3, **dadurch gekennzeichnet, dass** der Kornträger aus Kalksteingries, Estrichgips, Naturanhydrit, Sand, Ziegelsplitt, Hohlglaskugeln oder Gemischen derselben besteht.

5. Werk Trockenmörtel gemäß einem der Ansprüche 1 bis 4, **dadurch gekennzeichnet, dass** er bis zu 300 l/t Perlite enthält.

6. Werk Trockenmörtel gemäß einem der Ansprüche 1 bis 5, **dadurch gekennzeichnet, dass** er bis zu 2 Gew.% Fasern enthält.

7. Werk Trockenmörtel gemäß einem der Ansprüche 1 bis 6, **dadurch gekennzeichnet, dass** er zusätzlich Kalkhydrat, Stellmittel, Abbindeverzögerer, Abbindebeschleuniger, Netzmittel, Verdicker und/oder Mittel zur Regulierung der Wasserrückhaltung enthält.

## Claims

1. A premixed dry mortar based on clay powder, aggregates and other usual additives, **characterized by** containing:
• from 20 to 60% by weight of settable gypsum; and
• from 20 to 40% by weight of clay powder.

2. The premixed dry mortar according to claim 1, **characterized in that** the proportion of clay powder is from 20 to 30% by weight.

3. The premixed dry mortar according to claim 1 or 2, **characterized by** containing up to 40% by weight of granular support as said aggregate.

4. The premixed dry mortar according to any of claims 1 to 3, **characterized in that** said granular support consists of limestone grit, screed gypsum, natural anhydrite, sand, crushed clay brick, glass bubbles or mixtures thereof.

5. The premixed dry mortar according to any of claims 1 to 4, **characterized by** containing up to 300 l/t of perlites.

6. The premixed dry mortar according to any of claims 1 to 5, **characterized by** containing up to 2% by weight of fibers.

7. The premixed dry mortar according to any of claims 1 to 6, **characterized by** additionally containing lime hydrate, extenders, setting retarders, setting accelerators, wetting agents, thickening agents and/or agents for regulating water retention.

## Revendications

1. Mortier d'usine sec à bas de poudre d'argile, de granulats et d'autres additifs courants, **caractérisé en ce qu'**il contient
- 20 à 60% en poids de gypse apte à la prise et
- 20 à 40% en poids de poudre d'argile.

2. Mortier d'usine sec selon la revendication 1, **caractérisé en ce que** le pourcentage de poudre d'argile est de 20 à 30% en poids.

3. Mortier d'usine sec selon la revendication 1 ou 2, **caractérisé en ce qu'**il contient comme granulat jusqu'à 40% en poids de support granulé.

4. Mortier d'usine sec selon l'une des revendications 1 à 3, **caractérisé en ce que** le support granulé est constitué de granules de calcaire, de plâtre pour chape, d'anhydrite naturel, de sable, de briques concassées, de billes de verre creuses ou de mélanges de ceux-ci.

5. Mortier d'usine sec selon l'une des revendications 1 à 4, **caractérisé en ce qu'**il contient jusqu'à 300 1/t de perlite.

6. Mortier d'usine sec selon l'une des revendications 1 à 5, **caractérisé en ce qu'**il contient jusqu'à 2% en poids de fibres.

7. Mortier d'usine sec selon l'une des revendications 1 à 6, **caractérisé en ce qu'**il contient en plus de l'hydrate de chaux, des agents de fixation, des retardateurs de prise, des accélérateurs de prise, des agents mouillants, des agents épaississants et/ou des agents de régulation de la rétention d'eau.
